(19) Europäisches Patentamt / European Patent Office / Office européen des brevets

(11) **EP 2 690 153 A1**

(12) **EUROPEAN PATENT APPLICATION**

(43) Date of publication:
**29.01.2014 Bulletin 2014/05**

(51) Int Cl.:
*C09K 8/03* [(2006.01)]   *C09K 8/516* [(2006.01)]

(21) Application number: **12305798.6**

(22) Date of filing: **03.07.2012**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**BA ME**

(71) Applicants:
• **Services Pétroliers Schlumberger**
  **75007 Paris (FR)**
  Designated Contracting States:
  **FR**
• **Schlumberger Technology B.V.**
  **2514 The Hague (NL)**
  Designated Contracting States:
  **BG CZ DE DK GR HU IE IT LT MK NO PL RO SI SK SM TR**
• **Schlumberger Holdings Limited**
  **Tortola (VG)**
  Designated Contracting States:
  **GB NL**
• **Prad Research Development Limited**
  **Tortola (VG)**
  Designated Contracting States:
  **AT BE CH CY EE ES FI HR IS LI LU LV MC MT PT SE**

(72) Inventor: **Jain, Bipin**
**9261 Dubai (AE)**

(74) Representative: **Vandermolen, Mathieu**
**Etudes & Productions Schlumberger**
**IP Department**
**1, rue Henri Becquerel**
**B.P. 202**
**92142 Clamart (FR)**

(54) **Methods for completing subterranean wells**

(57)    Mixtures of fibers and solid particles are effective for curing fluid losses and lost circulation in a subterranean well. The efficiency of lost-circulation prevention may be further enhanced by incorporating a fluid-loss agent in the mixtures. The fluid-loss agent may reduce the filter-cake permeability and impart higher flexibility to the filter cake, thereby increasing the differential pressure that the filter cake may withstand across the lost-circulation pathways.

**Figure 1**

**Description**

**BACKGROUND**

The statements in this section merely provide background information related to the present disclosure and may not constitute prior art.

In many well treatments it is necessary to inject a fluid into the well under pressure. If some or all of the fluid leaks out of the wellbore, this is termed "fluid loss." If the treatment is one, such as drilling, in which the fluid is supposed to be returned to the surface, if some or all of the fluid does not return due to fluid loss, this is called "lost circulation." Lost circulation is a decades-old problem, but there is still not a single solution that can cure all lost-circulation situations. There are many available products and techniques, such as polymer pills and cement plugs, to cure lost-circulation issues.

One of the simplest approaches is to add a lost circulation material (LCM) in the drilling fluid and/or in the cement or polymer system. LCM systems often contain fibers. One of the major advantages of using fibers is the ease with which they can be handled. There is a wide variety of fibers available to the oilfield. Most are made from natural celluloses, synthetic polymers, and ceramics, minerals or glass. All are available in various shapes, sizes, and flexibilities.

Fibers decrease the permeability of a loss zone by creating a porous web or mat that filters out solids in the fluid, forming a low-permeability filter cake that can plug or bridge the loss zones. Typically, a very precise particle-size distribution should be used with a given fiber to achieve a suitable filter cake that then leads to plugging. Despite the wide variety of available fibers, the success rate and the efficiency are not always satisfactory.

Those skilled in the art will appreciate that the use of fibers in the context of lost circulation during well construction is distinctly different from that associated with well-stimulation treatments such as acidizing and hydraulic fracturing. The principal differences between the two applications are associated with permeability. The goal of lost circulation control during drilling or primary cementing is to block the flow of wellbore fluids into the formation. This involves reducing the permeability between the wellbore and the formation. On the other hand, the goal of stimulation treatments is to increase the effective permeability between the wellbore and the formation. Thus, any stimulation treatments involving fibers should not result in a permeability decrease.

The distinction between well construction and well stimulation is the fluid-flow direction. During drilling and primary cementing, fluid flow into the formation is generally to be avoided. The goal is to decrease the fluid-flow rate or stop it altogether. Conversely, stimulation operations are concerned with increasing the rate at which fluids flow out of the formation and into the wellbore.

A notable application of fibers in the context of hydraulic fracturing is proppant flowback control. Fibers are mixed with proppant in a way such that, when the well produces, the fibers prevent migration of proppant particles away from the fracture and into the wellbore. Yet the proppant pack containing fibers should remain permeable and allow efficient reservoir-fluid production. Such a condition would have no utility in the context of lost circulation control.

SUMMARY

Compositions and methods are given for blocking fluid flow through one or more pathways in a subterranean formation penetrated by a wellbore.

In an aspect, embodiments relate to compositions comprising a carrier fluid, stiff fibers, solid plugging particles and a fluid-loss control agent.

In a further aspect, embodiments relate to methods for treating lost circulation in a well having a subterranean formation penetrated by a wellbore, having one or more pathways in the formation through which fluids escape the wellbore and enter the formation. A carrier fluid is selected. In addition, compositions, concentrations and dimensions of stiff fibers and solid plugging particles are selected, as well as a fluid-loss control agent. The carrier fluid, stiff fibers, solid plugging particles and fluid-loss control agent are then mixed to prepare a blocking fluid. The blocking fluid is forced into the pathways in the formation until fluid flow into the formation is satisfactorily reduced.

In yet a further aspect, embodiments relate to methods for improving the flexibility of a barrier to lost circulation in a subterranean formation penetrated by a wellbore having one or more pathways in the formation through which fluids escape the wellbore and enter the formation. A carrier fluid is selected. In addition, compositions, concentrations and dimensions of stiff fibers and solid plugging particles are selected, as well as a fluid-loss control agent. The carrier fluid, stiff fibers, solid plugging particles and fluid-loss control agent are then mixed to prepare a blocking fluid. The blocking fluid is forced into the pathways in the formation until fluid flow into the formation is satisfactorily reduced.

**BRIEF DESCRIPTION OF THE DRAWINGS**

**Figure 1** is a schematic diagram depicting fiber deflection arising from an applied force.

**Figure 2** shows the modified fluid loss cell used.

**Figure 3** illustrates one form of slot used.

## DETAILED DESCRIPTION

Although the following discussion emphasizes blocking fractures encountered during drilling, the compositions and methods of the disclosure may also be used during cementing and other operations during which fluid loss or lost circulation are encountered. The disclosure will be described in terms of treatment of vertical wells, but is equally applicable to wells of any orientation. The disclosure will be described for hydrocarbon-production wells, but it is to be understood that the disclosure can be used in subterranean wells for the production of other fluids, such as water or carbon dioxide, or, for example, for injection or storage wells. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10. In other words, when a certain range is expressed, even if only a few specific data points are explicitly identified or referred to within the range, or even when no data points are referred to within the range, it is to be understood that the inventors appreciate and understand that any and all data points within the range are to be considered to have been specified, and that the inventors have possession of the entire range and all points within the range.

The author has determined that, in the use of mixtures of fibers and solid particles in blocking fluids to cure fluid losses and lost circulation, an important factor in the selection and use of suitable fibers is that they should not be too flexible (bend too easily) or too brittle (break too easily) for their length. In the present disclosure the term "stiff" will be used for suitable fibers. By stiff, it is to be understood that the fibers are neither too flexible nor too brittle.

In an aspect, embodiments relate to compositions comprising a carrier fluid, stiff fibers, solid plugging particles and a fluid-loss control agent.

Suitable carrier fluids may be aqueous-base, oil-base, oil-in-water emulsions and water-in-oil emulsions.

The author has determined that incorporating a fluid-loss control agent into the blocking fluid results in a performance improvement. Without wishing to be bound by any theory, the author believes that the fluid-loss control agent imparts greater flexibility and durability to the fiber/solid filter cake, and further lowers the cake permeability, thereby allowing the cake to withstand higher differential pressures across the lost-circulation pathways. In addition, for situations in which it may not be logistically possible to provide the optimal particle size distribution of solid plugging particles, the presence of the fluid-loss additive has a mitigating influence, allowing the filter cake to successfully treat lost circulation.

Suitable fluid-loss control agents include (but are not limited to) diutan gum, guar gum, hydroxypropyl guar gum, carboxymethyl hydroxypropyl guar gum, xanthan gum, welan gum, hydroxyethylcellulose, hydroxypropylcellulose, carboxymethylcellulose, carboxymethylhydroxyethylcellulose, methylcellulose, 2-acrylamido-2-methyl propane sulfonic acid polymer (AMPS), polyacrylamide, copolymers of AMPS and acrylic acid, copolymers of AMPS and N,N-dimethylacrylamide, copolymers of acrylamide and 3-allyloxyhydroxypropane sulfonate, terpolymers of tannin, AMPS and acrylamide, terpolymers of AMPS, acrylamide and itaconic acid, terpolymers of AMPS, acrylic acid and N-methyl-N-vinyl acetamide, terpolymers of AMPS, vinyl sulfonate and N-methyl-N-vinyl acetamide, tetrapolymers of AMPS, N-vinyl-2-pyrrolidone, acrylamide and acrylic acid, sulfonated polystyrene, styrene sulfonate/maleic anhydride copolymers, styrene sulfonate/maleic acid copolymers, sulfonated polyvinyltoluene polymer, polyvinyl alcohol, polyvinylpyrrolidone, maleic anhydride-N-vinylpyrrolidone polymer, styrene sulfonate/N-vinylpyrrolidone copolymer, polyethyleneimine, polyallylamine, alkyl ammonium chloride polymers, sulfonium chloride polymers, dimethyl-diallyl ammonium chloride polymers, methacrylamidopropyltrimethyl ammonium chloride polymers, polyvinylidene chloride latex or styrene-butadiene latex, and combinations thereof.

The suitable fluid-loss agent concentration range may be between about 1.0 and 50.0 g/L of the composition, the concentration may be between about 2.0 and 25.0 g/L of the composition, and the concentration may be between about 3.0 and 20.0 g/L of the composition. The stiff fibers, suitable for curing even total lost circulation situations in oilfield operations, should have a specific combination of Young's modulus (as will be discussed in detail below), diameter or other cross-sectional dimension, and length. Fiber suitability may also be determined by chemical composition and state (for example crystallinity), dimensions and shapes (for example cross-sectional shapes). Suitable stiffness may be a function of Young's modulus, length, and diameter (or longest cross-sectional dimension if not circular)-these factors may compensate for one another. For example, a low-Young's modulus fiber may be "stiff" if it has a sufficiently large diameter or is sufficiently short. Suitable fibers may have a Young's modulus between about 0.5 and about 100 GPa, which may be from about 1.0 to about 80 GPa, which may be from about 1.0 to about 10 GPa and which may be from about 1.5 to about 4 GPa. The fiber diameter (or, if not circular, the shortest cross-sectional dimension) may be generally between about 80 and about 450 microns, and may be between about 100 and about 400 microns. The fiber length may be between about 5 and about 24 mm, and may be about 6 to about 20 mm.

Suitable fibers have a "stiffness" (to be more precisely defined below) that may be about 100 to about 3000 times that of the glass fibers used in the experiments described below, which typically have a 20-micron diameter and a Young's modulus of about 65 GPa. Fibers according to the present disclosure are used with a blend of plugging particles that may be already present in the fluid or added to the fluid with the fibers. The particle-size distribution (PSD) of the blend of particles may optionally be optimized.

Although the experiments in the accompanying examples were performed with water-based carrier fluids, the combination of suitable fibers and a particle blend may also be used in other types of carrier fluids such as oil-base fluids, water-in-oil emulsions and oil-in-water emulsions. Optionally, wetting agents may be used to ensure that the materials are oil-wettable in oil-based muds or water-wettable in water-based muds. It will be within the general knowledge of the skilled person to perform laboratory tests to ensure fluid compatibility, that the fluid can transport the particles at the required pumping rates, and suitability for the size of the openings in the fluid-loss pathways to be plugged. Fluids envisioned include, but are not limited to, drilling fluids, polymer pills, cement slurries, chemical washes and spacers.

The fibers may be used before or during operations such as cementing. Unlike fibers from the art, the stiff fibers and methods of the disclosure are less sensitive to the particle sizes and fiber concentrations in the fluids. In addition, they demonstrate better resistance to pressure changes, and they provide robust performance in terms of reproducibility, spurt control and fluid-loss control. Notably, unlike previous fibers in the art, they can cover wide fracture widths—between about 1 mm to about 6 mm.

The compositions and methods of the disclosure provide solutions for a variety of situations, including (but not limited to) curing lost circulation of downhole fluids, fluid loss during gravel packing, fluid loss during wellbore consolidation treatments, cracking of cements, and other problems in oilfield operations. The compositions and methods may also be used in remedial treatments. One example may be the plugging of hydraulic fractures in formations that are no longer sufficiently productive.

Although many types, sizes, and shapes of fibers have been used in the art, the performance of these fibers depends mainly on the following parameters: the solids content of the fluids (which generally has had to be high), the fiber concentration (which generally has had to be high, especially to plug wide fractures), and a carefully selected and metered particle-size distribution. The stiff fibers and disclosed methods make these parameters less critical. The disclosed fibers and methods may be used at lower fiber concentrations, and they can be used with less dependence on the solids content and the particle-size distribution of the fluid solids. However, careful attention to these factors results in less spurt and fluid loss than other LCM systems from the art.

The disclosed fibers and methods can be used to plug many fracture widths, without the need to adjust the system variables, and with a variety of pressure drops across the filter cakes formed. The plugs easily sustain high pressure drops without failing. Without being bound by any theory, it is believed that stiff fibers according to the present disclosure are not necessarily dependent on the optimized Packing Volume Fraction (PVF) concept. The PVF concept involves preparing fluids with a multimodal particle-size distribution. The amounts and sizes of particles are chosen such that the solids content in the fluid is maximized, yet the fluid retains acceptable rheological properties. Optimized-PVF cement slurries are exemplified by CemCRETE™ technologies, available from Schlumberger.

For the current disclosure, the particles are optimized in a way such that they fit within the fiber network. Therefore, the optimal particle-size distribution will not necessarily correspond to an optimized-PVF system, and may be designed to promote internal plugging by filter cakes either away from the wellbore or at the wellbore face.

Fluid losses are generally classified in four categories. *Seepage* losses are characterized by losses of from about 0.16 to about 1.6 $m^3/hr$ (about 1 to about 10 bbl/hr) of mud. They may be confused with cuttings removal at the surface. Seepage losses sometimes occur in the form of filtration to a highly permeable formation. A conventional LCM, particularly sized particles, is usually sufficient to cure this problem. If formation damage or stuck pipe is the primary concern, attempts should be made to cure losses before proceeding with drilling. Losses greater than seepage losses, but less than about 32 $m^3/hr$ (about 200 bbl/hr), are defined as *partial* losses. In almost all circumstances when losses of this type are encountered, regaining full circulation is required. Sized solids alone may not cure the problem, and fibers are often needed. When losses are between about 32-48 $m^3/hr$ (200-300 bbl/hr), they are called *severe* losses, and conventional LCM systems may not be sufficient. Severe losses particularly occur in the presence of wide fracture widths. As with partial losses, regaining full circulation is required. If conventional treatments are unsuccessful, spotting of LCM or viscous pills may cure the problem. The fourth category is *total* losses, when the fluid loss exceeds about 32 $m^3/hr$ (about 300 bbl/hr). Total losses may occur when fluids are pumped past large caverns or vugs. In this case, fibers and sized solids alone might be ineffective, and the common solution is to employ cement plugs and/or polymer pills, to which fibers may be added for improved performance. An important factor in practice is the uncertainty of the distribution of zones of these types of losses, for example, a certain size fracture may result in severe loss or total loss depending on the number of such fractures downhole.

Without wishing to be bound by any theory, the author believes that the mechanism of fibers in helping to form strong filter cakes is based on three aspects.

1. **Build/Bridge**. The fiber should disperse well enough in the fluid so that it can build or create a fiber mesh network uniformly across the loss zone or zones, for example fracture widths.

2. **Plug**. The fiber mesh should then be plugged with a blend of solid particles to form a filter cake. The solids blend can optionally be optimized, that is, designed according to the porous structure created by the fibers, the porous structure being a function of the fiber properties, such as aspect ratio and elastic modulus.

3. **Sustain**. The filter cake of fiber mesh and solids should withstand changes in pressure downhole. Changes in pressure can occur, for example, due to pipe movements or changes in hydrostatic pressure. Erosion may be caused by fluid circulation in the annulus. Ideally, the filter cake should be able to withstand the pressure changes and tangential erosion flow downhole.

The author also believes that the solid particles in the fluid plug the porous structure of the mat or mesh created by the contact points where the fibers cross one another. The sizes of the openings between the contact points are a function of the fiber diameter and aspect ratio. Stiff fibers, having an aspect ratio in the range of about 10 to about 300, may create a dense and homogeneous porous structure (mesh) with a large number of contact points, thus reducing the required size of the solid particles that are used to plug the porous structure. The homogeneous mesh formed by stiff fibers does not require the solid particles to have a specific particle-size distribution to form a plug; therefore, the stiff fibers may be used with solids having a wide range of size distributions.

For non-stiff fibers, the porous structures are not well-defined, and experimental results indicate that they do require more specific particle-size distributions. The particle size distribution of the solids may be chosen, or the particles already in the fluid can be augmented, to take the porous nature of the fiber mesh into account.

The disclosed system employing stiff fibers and particle blends is useful for curing fluid losses into fissures, natural fractures, and small vugs. The dispersed fibers, homogeneously dispersed or flocculated, dehydrating and coming together into a clump, reduce the permeability of the loss zone or zones by creating a fibrous mesh. Fiber shape, surface properties and stiffness help to determine the extent of dispersion; for example, for a given fiber concentration and aspect ratio, fibers with different shapes and stiffnesses will exhibit different dispersion characteristics.

The fluid solids, including small cuttings if present, are trapped in the pores of the fibrous net. Fibers with larger diameters will form a mesh with larger openings (pores). The fiber flexibility can also have an influence. In addition, fibers having higher aspect ratios generally create a larger number of contact points per individual fiber. Furthermore, "non-stiff" fibers, for example typical multifilament polymer fibers such as those made of polypropylene, are flexible and can bend and overlap with neighboring fibers. This increases the particle diameter required to plug the openings between the contact points. However, stiff fibers (for example, the R1 polyvinyl alcohol fiber described later) do not bend as easily and therefore require fewer or no coarse particles.

The reduced dependence on the particle-size distribution of the solids is an important feature of the disclosure. Nevertheless, the solid particles may comprise a blend of coarse, medium, and fine particles. The coarse particles in the blend may have an average particle size above about 180 microns and below about 1000 microns; and may have a particle size of between about 700 and about 850 microns. The particles may have an average particle size of between about 30 and about 180 microns, and may be between about 150 and about 180 microns, for example about 130 microns, and may be used for the medium particles. The fine particles may have sizes below about 30 microns, and may have an average particle size of from about 10 to about 20 microns. The principal advantage of the fine particles is that they facilitate metering and handling of the blend; alternatively, the fine particles can be left out if the mixing and pumping equipment can handle blends of medium and coarse particles. If fine particles are required and can invade small formation pores, non-damaging particles may be used. The optimal ratio of the coarse/medium/fine particles varies, depending on the type of fiber.

The solid particles may be selected by one skilled in the art from one or more members of the list comprising carbonate minerals, mica, rubber, polyethylene, polypropylene, polystyrene, poly(styrene-butadiene), fly ash, silica, mica, alumina, glass, barite, ceramic, metals and metal oxides, starch and modified starch, hematite, ilmenite, ceramic microspheres, glass microspheres, magnesium oxide, graphite, gilsonite, cement, microcement, nut plug and sand. Carbonate minerals may be especially suitable, calcium carbonate in particular. Mixtures of different types of particles may be used. It will also be appreciated that suitable particles are not limited to the list presented above.

Coarse, medium and fine calcium-carbonate particles may have particle-size distributions centered around about 10 microns, 65 microns, 130 microns, 700 microns or 1000 microns, in a concentration range between about 5 weight percent to about 100 percent of the particles. Mica flakes may particularly suitable components of the particle blend. The mica may be used in any one, any two, or all three of the coarse, medium, and fine size ranges described above, and may be in a concentration range between about 2 weight per cent and about 10 weight per cent of the total particle blend. Nut plug may be used in the medium or fine size ranges, at a concentration between about 2 weight per cent and about 40 weight per cent. Graphite or gilsonite may be used at concentrations ranging from about 2 weight per cent to about 40 weight per cent. Lightweight materials such as polypropylene or hollow or porous ceramic beads may be used within a concentration range between about 2 weight per cent and about 50 weight per cent. The size of sand particles may vary between about 50 microns to about 1000 microns. If the particles are included in a cement slurry, the slurry density may be between about 1.0 and about 2.2 kg/L (about 8.5 and about 18 lbm/gal).

Many sizes and shapes of stiff fibers may be used. Stiff cylindrical fibers may have an aspect ratio between about 10 and about 300. Stiff rectangular fibers may have a thickness between about 20 microns and about 100 microns, a width between about 100 microns and about 450 microns, and a length between about 5 mm and about 24 mm. The Young's moduli of the stiff fibers according to the present disclosure are important. In fact, it is desirable for the fibers to deform just enough under shear or restriction so that they will not break. On the other hand, in general, fibers with excessively high Young's moduli cannot resist deformation without rupturing when pumped through restrictions. For example, glass fibers with a Young's modulus of approximately 65 GPa will break into pieces when pumped through restrictions during oilfield treatments.

It is known that sufficient solids concentrations and particular particle sizes may be necessary for the fibers to work. In the prior art, the pressure drop is essential to enhance the filtering process, and the fiber-plug performance may change with pressure drop. Thus, having a high solids concentration is one of the important criteria for fibers to work, but optimizing the particle size distribution and solids size is even more critical.

As discussed earlier, the stiff fibers and methods of the disclosure do not necessarily need coarse particles to plug fractures, and their stiffness plays a very important role in plugging severe fracture widths. For example, stiff fibers can plug 3-mm fractures without coarse particles. This is unique, as prior art fibers, for example glass and polymer monofilament fibers, need 20 volume per cent coarse particles with 25 per cent total fluid solids content to plug 2-mm fractures. Flexible fibers still cannot plug 3-mm fractures, even with further increases in the coarse-particle concentration.

The use of the stiff fibers and methods of the disclosure minimizes the necessity of using large-diameter particles to plug larger fracture widths. Stiff fibers may work effectively with suitable concentrations of medium particles or with a combination of medium and coarse particles. However, an optional optimized solids blend for a particular type of stiff fiber may provide a solution to the uncertainty of fracture widths and numbers downhole.

Unlike the prior art, the use of the stiff fibers and methods of the present disclosure extends the solids-concentration boundaries, and the sizes of solid particles that are sufficient to plug certain stiff fiber meshes. The different solid particles and additives present in drilling fluids and cement slurries typically have sizes in the range between about 10 microns and about 1000 microns. The base fluid may be designed in such a way that it contains conventional LCM's, for example multi-modal sizes of particles of calcium carbonate or gilsonite, different sizes of mica flakes or nut plug, etc., and the solids content of the fluid may range from about 10 per cent to about 60 per cent. With the use of stiff fibers the need for solids optimization is clearly reduced. Stiff fibers are typically monofilaments. Flexible fibers are generally multifilaments for ease of handling, and are sold as tows.

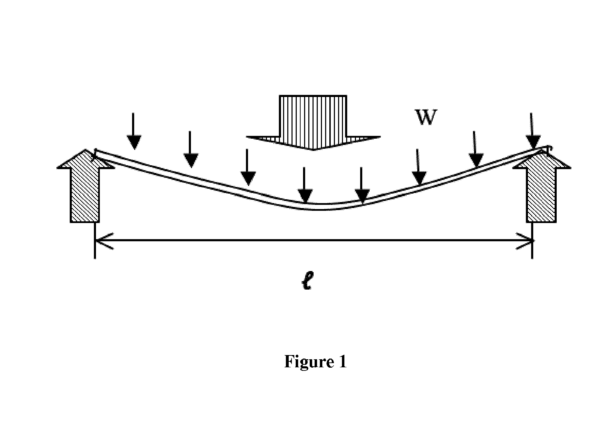

Stiffness is proportional to the Young's modulus of a fiber, and is generally known as the resistance to deformation. Fiber stiffness is one of the main characteristics affecting fiber performance. A simplified approach to characterize fiber resistance is to consider the fiber to be similar to structural beam, bending between two supports on each end. This is illustrated in Fig. 1, showing the deflection of a fiber of length *l*, deforming under an applied load W .

Several assumptions were used to obtain an estimate of the fiber deflection when exposed to a load. This was a simplified theoretical approach for estimating the strength of a fiber. The assumptions were as follows:

- Calculations were based on ambient conditions in air.
- The load was the pressure drop acting directly towards the fiber.
- The load was uniform over the fiber length.
- There was no fiber overlapping.

The load was calculated from the applied pressure (for example 70 gram-force/square millimeters (100 psi) and the fiber surface area exposed to that pressure.

Fiber Deflection:

$$y = \frac{5}{384} \frac{Wl^3}{EI} \tag{1}$$

Cylindrical Inertia:

$$I_c = \frac{\pi r^4}{4} \text{, or} \tag{2}$$

$$I_c = 0.0491 d^4 \qquad (3)$$

Rectangular Inertia:

$$I_r = \frac{tb^3}{12} \qquad (4)$$

$W$ = Weight or force causing the deflection (grams)
$E$ = Modulus of Elasticity (Kg/mm2)
$I$ = Moment of Inertia (mm$^4$)
$\ell$ = Fracture width (mm)
$y$ = Deflection (mm)
$r$ = Fiber radius (micron)
$t$ = Fiber thickness (mm)
$b$ = Fiber width/breadth (mm)

From the preceding equations, one may derive an expression for calculating "stiffness."

$$S = \frac{Ed^4}{Wl^3}, \text{ where} \qquad (5)$$

$S$ = stiffness.

These equations may be applied to fibers of regular or irregular cross-sectional shape; as an example the calculation for fibers having circular cross sections is given below.

The deflection is proportional to 1/stiffness, and the $W$ and $I$ in Eq. 1 were kept constant for all the fibers and the stiffness was thus calculated. Table 1 presents "stiffness factors," defined as the ratio of the stiffness of a given fiber to the stiffness of a glass fiber (GL). The glass fibers had a Young's modulus of 65 GPa, a 20-micron diameter and were 12 mm long. The nature of the polypropylene (FM), nylon (NL) and crosslinked-polyvinyl alcohol (R1 and R2) fibers will also be described later in more detail. The calculation of the stiffness or stiffness factor for the rectangular fiber is the same as for the circular fibers, except that the inertia rectangle expression (Eq. 4) would be used.

**Table 1. Stiffness Estimation**

| Fiber | Material | Diameter/thickness | E | Sttifness factor |
|---|---|---|---|---|
| | | (um) | (Kg/mm2) | |
| 1. GL - 20 microns | Alkaline resisted glass | 20 | 6628.16 | 1.000 |
| 2. FM - 45microns | Polypropylene | 45 | 152.96 | 0.591 |
| 3.NL-150microns | Nylon | 150 | 203.94 | 97.356 |
| 4. NL - 250microns | Nylon | 250 | 203.94 | 751.202 |
| 5. NL - 280 microns | Nylon | 280 | 203.94 | 182.031 |
| 6. FM - 12.5microns | Polypropylene | 12.5 | 152.96 | 0.004 |
| 7. NL - 50microns | Nylon | 50 | 203.94 | 1.202 |
| 8. R1 | Crosslinked Polyvinyl alcohol | 80 | 2957.18 | 1014.818 |
| 9. R2 | Crosslinked Polyvinyl alcohol | 100 | 2549.29 | 240.385 |

The author believes that fibers with stiffness factors from about 2 to about 400,000 are suitable, and may be between 4 and 12,000; and may be between 80 and 2,500. The stiffness comparison is not limited to circular and rectangular fibers, but can be extended to fibers with other types of cross section.

Higher relative humidity and temperature adversely affect fiber stiffness. Stiff or, to some degree, thicker fibers help create a good mechanical barrier or anchor in a fracture. In addition, particles or flexible fibers, which may be optimized in size and/or shape, effectively reduce the pore sizes between the stiff fibers. It is important to note that a "stiff" fiber is not necessarily a hard or mechanically strong fiber. Suitable stiff fibers can have a Young's moduli between about 0.5 and about 100 GPa., and may be between about 1.0 and 80 GPa, and may be between about 1.5 and about 4 GPa. Such fibers (for their length and diameter) may be flexible enough to bend without breaking under oilfield conditions. Polymers such as polypropylene, nylon, and polyvinyl alcohol may fall within this range. In general, a combination of low Young's modulus and larger diameter, hence higher surface area than micron-diameter fibers, may be particularly suitable if the length is suitable.

Glass fibers of typical diameters are not suitable, because of the high Young's modulus of glass, typically from 50 to 90 GPa. Glass is brittle, not flexible, and cannot withstand higher pressures across a fiber mesh. For example a pressure differential of 3.45 MPa (500 psi) will rupture the glass fibers. "Flexible mono-filament" fibers are not brittle, but are generally not stiff enough because their diameters are typically in the 10 to 80 micron range. They are extremely flexible, and tend to deform excessively and fail under high test pressures. On the other hand, it should be borne in mind that bundles of fibers may have properties different from individual fibers. For example, a bundle of several micron-sized flexible propylene fibers bonded together into a single strand may be a "stiff" fiber of the disclosure.

Two (or more) different fibers may be used in the disclosed compositions and methods. At present, they will be termed primary and secondary fibers. The primary fibers should be stiff fibers, but may be of any composition that provides suitable properties. The secondary fibers may be any fibers, stiff or not. When properly chosen, the primary and secondary fibers may act synergistically. Stiff fibers may have lengths between about 5 mm and about 24 mm, and may have lengths between about 6 and about 20 mm. Stiff fibers of the disclosure include (but are not limited to) materials such as polypropylene, nylon, glass, Kevlar™, and crosslinked polyvinyl alcohol. They are commercially available in different diameters and shapes. The specific gravity of stiff fibers may be between about 0.90 and about 1.5, although denser materials may be used, for example certain metal ribbons such as iron or aluminum alloys.

The secondary fiber may be an organic or synthetic type of fiber, for example with a Young's modulus between about 0.5 GPa and about 100 GPa, and which may be between about 0.5 GPa and 10 GPa. The fiber diameter may be between about 10 microns and about 100 microns, and may be between about 10 microns and about 50 microns. The fiber length may be between about 5 mm and about 24 mm, and may be between about 6 mm and about 20 mm. Examples of secondary fibers include (but are not limited to) polypropylene, novoloid, Kevlar™, glass, nylon, polyamide, polylactic resin, polyvinyl alcohol, polyester, and cellulose. Degradable fibers (i.e., those that eventually decompose or dissolve) may also be suitable.

The primary and secondary fibers may be of any fiber shape, for example, round, cylindrical, ribbon-like flat, coil-like spiral, trilobe, star shape, disoriented or irregular. Secondary fibers may also be fibrillated. The secondary fibers may also be reactive fibers that can form a sticky fibrous net at certain temperatures, for example polyvinyl alcohol or polylactic resin.

A suitable total fiber concentration is in the range between about 2.85 and about 42.8 kg/m$^3$ (about 1 and about 15 lbm/bbl), and may be between about 5.7 and about 22.8 kg/m$^3$ (about 2 to about 8 1bm/bbl). The suitable ratio of primary to secondary fibers may be between about 95/5 and about 30/70 by fiber volume, and may be between about 90/10 and about 50/50.

The primary and secondary fibers do not necessarily need to have two different chemical compositions. For example, nylon having a Young's modulus of 4 GPa and a diameter of 150-400 microns may be the primary (stiff) fiber, and flexible multifilament nylon fibers with a diameter of 50 microns may be the secondary fibers.

There are many benefits of fiber blends. They may be compatible with a wider range of particles, in other words, they may be less sensitive to the PSD of the plugging particles. They may create a unique plug because the flexible fibers invade the fracture and thus anchor the plug, providing much better stability in terms of resisting erosion. Finally, the incorporation of flexible fibers (in this case, thin fibers) also may help to suspend the thicker, stiff fibers that otherwise could not be used alone because they would settle during injection.

The nature of the filter cake should also be considered. One of the problems with filter cakes, even those including fibers, is that fluid circulation may erode the surface of the filter cake by tangential flow. However, with a well-tuned system, stiff fibers may cause the plug to form internally, rather than at the entrance to the fracture, so that erosion cannot occur. However, high fiber concentrations may pose operational issues at the rig site, for example plugging of mixing equipment, or pump cavitation. The stiff-fiber concentration used in the field should be between about 2.85 kg/m$^3$ and about 28.5 kg/m$^3$ (about 1.0 1bm/bbl and about 10.0 1bm/bbl), without increasing the apparent viscosity of the fluid and compromising fluid pumpability.

To address lost-circulation effectively, the fibers should follow the earlier-described three-step mechanism to build a filter cake. In fact, a failure in any part of this three-step process may result in a plug failure. Fiber characteristics such as stiffness may play a vital role in plug performance. Stiff fibers resist more pressure with a smaller deflection, may build a structure corresponding to the fracture width, and trap optimized solids. Having stiff primary fibers may also provide mechanical anchoring to other (secondary) fibers when both are used. It is equally important for the stiff fibers (for example having diameters in the range of about 80 microns to about 450 microns) to have sufficiently low Young's moduli that they can be pumped through small restrictions while minimizing any breakage or blockage concerns.

The author has determined that, for a given type of fiber or fiber blend, increasing the fiber concentration improves the efficiency of fluid-loss control. In addition to increasing the fiber concentration to achieve better fluid loss control, the Solid Volume Fraction (SVF) of the particles in the fluid may also be increased, i.e. adding more sized solids, to improve the fluid control efficiency. Alternatively, increasing the particle size of the added solids may also improve the overall efficiency of fluid-loss control. Note that it would be necessary to ensure that the overall particle-size distribution of the added particles was still in the suitable working range; otherwise, simply increasing the particle size would not result in increased efficiency. Plate-like materials may also be used to better control the fluid loss.

The author has also determined that, for a given fiber or fiber blend, the particle-size distribution (PSD) of the added particles governs the permeability of the plugged fiber network. The selection of the proper PSD of the added particles is based on the pore-size distribution of the fiber network, and therefore depends on structural parameters of the fibers. However, even if the PSD of the particles is properly engineered, then an adequate concentration of particles in the fluid may still needed in order to achieve fluid-loss control. As previously mentioned, the optimal PSD range depends on the structure of the fibers. For example, when thinner and more flexible fibers are used, addition of coarser particles is needed to control the fluid loss. There is a minimum solids volume fraction (SVF) in the fluid for the fibers to be effective. For a given fiber system, any SVF above the minimum is suitable. The suitable SVF is between about 8 and about 50 percent, and may be between about 15 and about 35 percent. The fluid pumpability might become problematic if the SVF exceeds these limits.

The stiff fibers and solids may be added to the drilling fluid (mud) in any order and with any suitable equipment to form the treatment fluid. If the fluid already contains some or all of the solids necessary to form a filter cake on the mesh of stiff fibers, this is taken into account. Typically, the fluid containing the fibers and solids is mixed before pumping downhole. The fibers can be added and mixed and then the solids added and mixed, or *vice versa,* or both fibers and solids can be added before mixing. It may be determined that one of the components aids in the suspension and/or dispersion of the other, in which case the helpful component is mixed into the fluid first. Typically, the treatment fluid is weighted to approximately the same density as the fluid previously injected into the well. This practice minimizes migration of the treatment fluid and helps prevent mixing with the previously injected fluid. A weighting material may optionally be added to the fluid, the fibers, or the solids at any point. The treatment fluid may be added in a discrete amount, for example as a pill, or may be added continuously until lost circulation or fluid loss is satisfactorily reduced. The treatment fluid may be spotted adjacent to the location of the lost circulation, if known, by methods known in the art.

The fluid containing the mixture of stiff fibers and solids may be injected in several stages, in which the relative amounts of solids and fibers varies from stage to stage. Optionally, the stiffness of the stiff fibers may initially be less than optimal and then be increased to a suitable stiffness during the treatment. For example the concentration of stiff fibers may be selected in the range of zero to a lower-than-optimal concentration of stiff fiber in the first stage or stages of the treatment. A suitable low concentration can be determined by measuring the minimal effective concentration of the stiff fiber necessary to form a mesh across a specific fracture size and then using a concentration in the range of from about 10 to about 90 percent of that minimal effective blocking concentration. The selected low concentration should be tested in the same equipment to validate the non-blocking effect of the treatment. The treatment with a low concentration of the stiff fiber is followed by a treatment with an effective concentration of stiff fibers capable of rapid blockage. Effective concentrations may be determined by experiments described later. As a result, treatment with the effective concentration blocks the fracture at or near the wellbore, and the low concentration stiff fiber plugs the fracture at a bottleneck deeper in the fracture.

In another case, in addition to a change in the stiff fiber concentration, the amount and/or size distribution of the plugging solid particles may also be decreased. In general, whenever any changes are made in the concentration or nature of the fibers, the concentration and particle-size distribution of the plugging solids should be reevaluated. The low-concentration treatment may be designed in such a way that it blocks certain fracture sizes smaller than the original fracture size. For example, the initial low-concentration treatment may be designed to treat a 1-mm fracture, and the following treatment may be designed to treat a 4-mm fracture. For a 1-mm fracture, using zero to a low concentration of stiff fibers may be sufficient. When any of these strategies is followed, the treatment forms blockages at one or more different depths in a fracture or in pores. One blockage may be close to or at the wellbore and another deeper in the fracture or pores.

Particularly, in the cases of severe or total losses, the stiff fibers and methods of the disclosure may be used as a pre-treatment before a more consolidated treatment. This use as a pre-treatment decreases the total cost, decreases damage to the formation, decreases further problems that may otherwise appear because of delays in treatment, and increases the chances of an effective first placement of the secondary treatment (such as a cement plug or a reactive pill). Thus, the stiff fibers and methods of the disclosure may be used in a first (primary) treatment for a temporary cure of severe or total losses. For greater assurance of a permanent and complete treatment, it is convenient for a driller then to place a second treatment, such as a viscous pill or a cement plug. In that case the compositions and methods assure that the second treatment is effective.

In a further aspect, embodiments relate to methods for treating lost circulation in a well having a subterranean formation penetrated by a wellbore, having one or more pathways in the formation through which fluids escape the wellbore and enter the formation.

A carrier fluid is selected. Compositions, concentrations and dimensions of stiff fibers and solid plugging particles are selected. A fluid-loss control agent is selected. The carrier fluid, fibers, solid plugging particles and fluid-loss agent are then combined to form a blocking fluid. The blocking fluid is forced into the pathways until fluid flow into the formation is satisfactorily reduced. During blocking-fluid placement, the fibers may form a mesh across the pathways and the solid particles may plug the mesh, thereby forming a flow barrier, and the fluid-loss agent may impart greater barrier flexibility and resistance to differential pressure.

The carrier fluid may be an aqueous fluid, an oil-base fluid, a water-in-oil emulsion or an oil-in-water emulsion.

Suitable Young's moduli for the stiff fibers may be between about 0.5 GPa and about 100 GPa, may be between about 1.0 and 80 GPa and may be about 1.5 to 4 GPa. The fibers may have a shortest cross-sectional distance between about 80 and 450 microns. The length of the stiff fibers may be between about 5 and 24 mm, and may be between about 6 to about 20 mm. The stiff fiber concentration in the composition may be between about 2.85 and about 42.8 $kg/m^3$, and may be between about 5.7 and about 22.8 $kg/m^3$.

The composition may further comprise secondary fibers that are selected from non-stiff fibers, differing stiff fibers or both. In these cases, the total fiber concentration may be between about 2.85 to about 42.8 $kg/m^3$. The Young's moduli of the non-stiff fibers may be between about 0.5 and about 10 GPa. The shortest cross-sectional distance of the non-stiff fibers may be between about 10 to about 100 microns.

The solid particles may comprise a blend of coarse, medium, and fine particles. The coarse particles in the blend may have an average particle size above about 180 microns and below about 1000 microns; they may have a particle size between about 700 and about 850 microns. Particles having an average particle size between about 30 and about 180 microns, which may be about 150 and about 180 microns, for example about 130 microns, may be used for the medium particles. The fine particles may have sizes below about 30 microns, and may have an average particle size between about 10 and about 20 microns.

The solid particles may be selected from one or more members of the group comprising carbonate minerals, mica, rubber, polyethylene, polypropylene, polystyrene, poly(styrene-butadiene), fly ash, silica, mica, alumina, glass, barite, ceramic, metals and metal oxides, starch and modified starch, hematite, ilmenite, ceramic microspheres, glass microspheres, magnesium oxide, graphite, gilsonite, cement, microcement, nut plug and sand. Carbonate minerals are especially suitable, calcium carbonate in particular. Mixtures of different types of particles may be used. It will also be appreciated that suitable particles are not limited to the list presented above.

Coarse, medium and fine calcium-carbonate particles may have particle-size distributions centered around about 10 microns, 65 microns, 130 microns, 700 microns or 1000 microns, in a concentration range between about 5 weight percent to about 100 percent of the particles. Mica flakes may be particularly suitable components of the particle blend. The mica may be used in any one, any two, or all three of the coarse, medium, and fine size ranges described above, which may be in a concentration range between about 2 weight per cent to about 10 weight per cent of the total particle blend. Nut plug may be used in the medium or fine size ranges, at a concentration between about 2 weight per cent to about 40 weight per cent. Graphite or gilsonite may be used at concentrations ranging from about 2 weight per cent to about 40 weight per cent. Lightweight materials such as polypropylene or hollow or porous ceramic beads may be used within a concentration range between about 2 weight per cent to about 50 weight per cent. The size of sand particles may vary between about 50 microns to about 1000 microns. If the particles are included in a cement slurry, the slurry density may be between about 1.0 to about 2.2 kg/L (about 8.5 to about 18 lbm/gal).

Suitable fluid-loss control agents include (but are not limited to) diutan gum, guar gum, hydroxypropyl guar gum, carboxymethyl hydroxypropyl guar gum, xanthan gum, welan gum, hydroxyethylcellulose, hydroxypropylcellulose, carboxymethylcellulose, carboxymethylhydroxyethylcellulose, methylcellulose, 2-acrylamido-2-methyl propane sulfonic acid polymer (AMPS), polyacrylamide, copolymers of AMPS and acrylic acid, copolymers of AMPS and N,N-dimethylacrylamide, copolymers of acrylamide and 3-allyloxyhydroxypropane sulfonate, terpolymers of tannin, AMPS and acrylamide, terpolymers of AMPS, acrylamide and itaconic acid, terpolymers of AMPS, acrylic acid and N-methyl-N-vinyl acetamide, terpolymers of AMPS, vinyl sulfonate and N-methyl-N-vinyl acetamide, tetrapolymers of AMPS, N-vinyl-2-pyrrolidone, acrylamide and acrylic acid, sulfonated polystyrene, styrene sulfonate/maleic anhydride copolymers, styrene sulfonate/maleic acid copolymers, sulfonated polyvinyltoluene polymer, polyvinyl alcohol, polyvinylpyrrolidone, maleic anhydride-N-vinylpyrrolidone polymer, styrene sulfonate/N-vinylpyrrolidone copolymer, polyethyleneimine, polyallylamine, alkyl ammonium chloride polymers, sulfonium chloride polymers, dimethyl-diallyl ammonium chloride polymers, methacrylamidopropyltrimethyl ammonium chloride polymers, polyvinylidene chloride latex or styrene-butadiene latex, and combinations thereof.

The suitable fluid-loss agent concentration range may be between about 1.0 and 50.0 g/L of the composition, the concentration may be between about 2.0 and 25.0 g/L of the composition, and the concentration may be between about 3.0 and 20.0 g/L of the composition.

The lost-circulation pathway may have one dimension that is least 1 mm. The pathway may also be a hydraulic fracture, and the disclosed methods may be employed to block the fracture.

In yet a further aspect, embodiments relate to methods for improving the flexibility of a barrier to lost-circulation in a subterranean formation penetrated by a wellbore having one or more pathways in the formation through which fluids escape the wellbore and enter the formation.

The carrier fluid may be an aqueous fluid, an oil-base fluid, a water-in-oil emulsion or an oil-in-water emulsion.

Suitable Young's moduli for the stiff fibers may be between about 0.5 GPa and about 100 GPa, may be between about 1.0 and 80 GPa and may be about 1.5 to 4 GPa. The fibers may have a shortest cross-sectional distance between about 80 and 450 microns. The length of the stiff fibers may be between about 5 and 24 mm, and may be between about 6 to about 20 mm. The stiff fiber concentration in the composition may be between about 2.85 and about 42.8 $kg/m^3$, and may be between about 5.7 and about 22.8 $kg/m^3$.

The composition may further comprise secondary fibers that are selected from non-stiff fibers, differing stiff fibers or both. In these cases, the total fiber concentration may be between about 2.85 to about 42.8 $kg/m^3$. The Young's moduli of the non-stiff fibers may be between about 0.5 and about 10 GPa. The shortest cross-sectional distance of the non-stiff fibers may be between about 10 to about 100 microns.

The solid particles may comprise a blend of coarse, medium, and fine particles. The coarse particles in the blend may have an average particle size above about 180 microns and below about 1000 microns; they may have a particle size between about 700 and about 850 microns. Particles having an average particle size between about 30 and about 180 microns, which may be about 150 and about 180 microns, for example about 130 microns, may be used for the medium particles. The fine particles may have sizes below about 30 microns, and may have an average particle size between about 10 and about 20 microns.

The solid particles may be selected from one or more members of the group comprising carbonate minerals, mica, rubber, polyethylene, polypropylene, polystyrene, poly(styrene-butadiene), fly ash, silica, mica, alumina, glass, barite, ceramic, metals and metal oxides, starch and modified starch, hematite, ilmenite, ceramic microspheres, glass microspheres, magnesium oxide, graphite, gilsonite, cement, microcement, nut plug and sand. Carbonate minerals are especially suitable, calcium carbonate in particular. Mixtures of different types of particles may be used. It will also be appreciated that suitable particles are not limited to the list presented above.

Coarse, medium and fine calcium-carbonate particles may have particle-size distributions centered around about 10 microns, 65 microns, 130 microns, 700 microns or 1000 microns, in a concentration range between about 5 weight percent to about 100 percent of the particles. Mica flakes may be particularly suitable components of the particle blend. The mica may be used in any one, any two, or all three of the coarse, medium, and fine size ranges described above, which may be in a concentration range between about 2 weight per cent to about 10 weight per cent of the total particle blend. Nut plug may be used in the medium or fine size ranges, at a concentration between about 2 weight per cent to about 40 weight per cent. Graphite or gilsonite may be used at concentrations ranging from about 2 weight per cent to about 40 weight per cent. Lightweight materials such as polypropylene or hollow or porous ceramic beads may be used within a concentration range between about 2 weight per cent to about 50 weight per cent. The size of sand particles may vary between about 50 microns to about 1000 microns. If the particles are included in a cement slurry, the slurry density may be between about 1.0 to about 2.2 kg/L (about 8.5 to about 18 lbm/gal).

Suitable fluid-loss control agents include (but are not limited to) diutan gum, guar gum, hydroxypropyl guar gum, carboxymethyl hydroxypropyl guar gum, xanthan gum, welan gum, hydroxyethylcellulose, hydroxypropylcellulose, carboxymethylcellulose, carboxymethylhydroxyethylcellulose, methylcellulose, 2-acrylamido-2-methyl propane sulfonic acid polymer (AMPS), polyacrylamide, copolymers of AMPS and acrylic acid, copolymers of AMPS and N,N-dimethylacrylamide, copolymers of acrylamide and 3-allyloxyhydroxypropane sulfonate, terpolymers of tannin, AMPS and acrylamide, terpolymers of AMPS, acrylamide and itaconic acid, terpolymers of AMPS, acrylic acid and N-methyl-N-vinyl acetamide, terpolymers of AMPS, vinyl sulfonate and N-methyl-N-vinyl acetamide, tetrapolymers of AMPS, N-vinyl-2-pyrrolidone, acrylamide and acrylic acid, sulfonated polystyrene, styrene sulfonate/maleic anhydride copolymers, styrene sulfonate/maleic acid copolymers, sulfonated polyvinyltoluene polymer, polyvinyl alcohol, polyvinylpyrrolidone, maleic anhydride-N-vinylpyrrolidone polymer, styrene sulfonate/N-vinylpyrrolidone copolymer, polyethyleneimine, polyallylamine, alkyl ammonium chloride polymers, sulfonium chloride polymers, dimethyl-diallyl ammonium chloride polymers, methacrylamidopropyltrimethyl ammonium chloride polymers, polyvinylidene chloride latex or styrene-butadiene latex, and combinations thereof.

The suitable fluid-loss agent concentration range may be between about 1.0 and 50.0 g/L of the composition, the concentration may be between about 2.0 and 25.0 g/L of the composition, and the concentration may be between about 3.0 and 20.0 g/L of the composition.

The lost-circulation pathway may have one dimension that is least 1 mm. The pathway may also be a hydraulic fracture, and the disclosed methods may be employed to block the fracture.

For all aspects of the disclosure, the fibers and solids may be added to the blocking fluid in any order and with any suitable equipment to form the fluid. If the fluid already contains some or all of the solids necessary to form a filter cake on the mesh of fibers, this may be taken into account. Typically, the fluid containing the fibers and solids may be mixed before pumping downhole. The fibers can be added and mixed and then the solids added and mixed, or *vice versa,* or both fibers and solids can be added before mixing. It may be determined that one of the components aids in the suspension and/or dispersion of the other, in which case the helpful component is mixed into the fluid first. Typically, the blocking fluid may be weighted to approximately the same density as the fluid previously injected into the well. This practice minimizes migration of the treatment fluid and helps prevent mixing with the previously injected fluid. A weighting material may optionally be added to the fluid, the fibers, or the solids at any point. The treatment fluid can be added in a discrete amount, for example as a pill, or can be added continuously until lost circulation or fluid loss is satisfactorily reduced. The treatment fluid may be spotted adjacent to the location of the lost circulation, if known, by methods known in the art.

Although the experiments in the following examples were performed with water-base fluids, the combination of suitable fibers, particle blend and fluid-loss control agent may also be used in oil-base fluids, oil-in-water emulsions and water-in-oil emulsions. Optionally, wetting agents may be used to ensure that the materials are oil-wettable in oil-based muds or water-wettable in water-based muds. It will be within the general knowledge of the skilled person to perform laboratory tests to ensure fluid compatibility, so that the fluid can transport the particles at the required pumping rates, and suitability for the size of the openings in the fluid-loss pathways to be plugged. Fluids envisioned include, but are not limited to, drilling fluids, polymer pills, cement slurries, chemical washes and spacers. The fibers may be used before or during operations such as cementing.

## EXAMPLES

The following examples serve to further illustrate the disclosure.

## EXPERIMENTAL

Experiments to assess lost-circulation control were performed with five water-base fluids. The density of the fluids was 1500 kg/m$^3$ (12.5 lbm/gal). The fluid formulations and their rheological properties are shown in Table 2. PV is the plastic viscosity, and Ty is the dynamic shear stress for Bingham fluids. The formulations contained a silicone-base or a polyglycol-base antifoam agent, MUDPUSH™ spacer mix (available from Schlumberger), bentonite, fine calcium carbonate (average particle size: 27 μm), medium calcium carbonate (average particle size: 134 μm), UNI-FLAC™-S fluid-loss additive (available from Schlumberger) and LOSSEAL™ W fibers (available from Schlumberger).

Table 2. Compositions and Rheological Properties of Test Fluids

| Composition/Test Number | 1 | 2 | 3 | 4 | 5 |
|---|---|---|---|---|---|
| Silicone Antifoam Agent (mL/L) | 2.4 | 0 | 0 | 0 | 0 |
| Polyglycol Antifoam Agent (mL/L) | 0 | 2.4 | 2.4 | 2.4 | 2.4 |
| MUDPUSH™ Spacer Mix (g/L) | 8.5 | 14.2 | 0.7 | 5.7 | 5.7 |
| Bentonite (g/L) | 8.5 | 8.5 | 8.5 | 8.5 | 0 |
| Fine Calcium Carbonate (g/L) | 85 | 85 | 85 | 85 | 85 |
| Medium Calcium Carbontate (g/L) | 694 | 694 | 694 | 694 | 694 |
| UNIFLAC™-S Fluid-Loss Additive (g/L) | 0 | 0 | 8.5 | 12.8 | 17.0 |
| LOSSEAL$^{TM}$ W Fibers (g/L) | 5.7 | 5.7 | 5.7 | 5.7 | 5.7 |
| PV (cP) | 49 | 37 | 54 | 293 | 344 |
| Ty (lbf/100ft$^2$) | 19 | 35 | 12 | 34 | 37 |

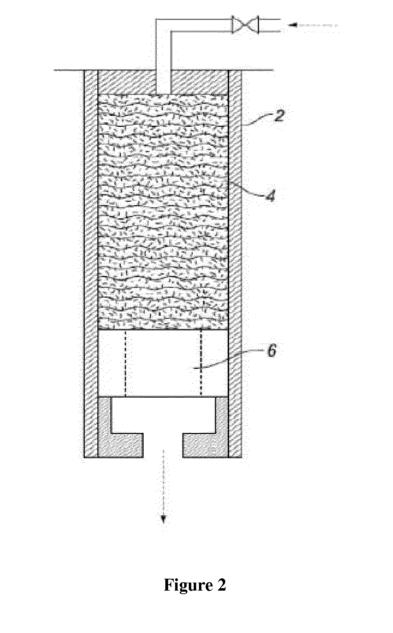

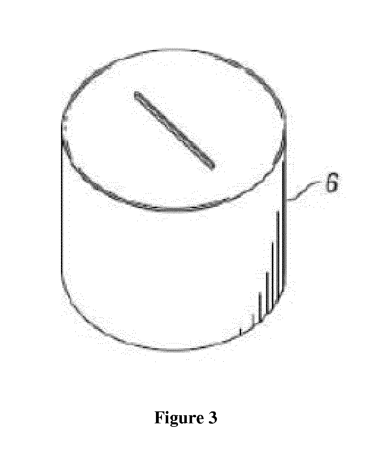

Most of the tests were performed in a modified lost-circulation cell, shown in Fig. 2. The cell was equipped with modified slits through a grid, or a cylinder approximately 50 mm high having a 3 mm slot. Figure 3 shows the arrangement with a slot. The experimental apparatus consisted essentially of a high-pressure high-temperature fluid loss cell **2** that is equipped with the cylinder **6** at the bottom. Pressure was applied from the top of the cell onto fluid **4** placed in the cell (as in traditional fluid-loss experiments). A valve at the bottom was closed, and a grid or cylinder having a slot or holes was placed inside the cell. 300 mL of fiber-laden fluid was poured into the test cell, and the cell was closed and pressurized to 0.69 MPa (100 psi) to simulate the differential pressure at two ends of a fracture. Once the cell was pressurized, the bottom valve was opened quickly enough to eliminate filtration of fibers through the bottom pipe. If the grid was plugged, then the pressure was increased from 0.35 MPa (50 psi) to 6.9 MPa (1000 psi), in steps of 0.35 MPa (50 psi). The pressure increase was purposely introduced to verify the strength of the filter cake. The pressure was held constant for at least 30 minutes, unless no plug formed or the plug failed. Mud loss was monitored by collecting filtrate in a container. The container was placed on a balance connected to a computer, allowing one to record fluid loss over time.

During some experiments, the fibers were able to plug the slots at low pressure; however, as soon as the pressure was increased, the plug failed and the fluid inside the cell came out. If at any time the plug failed, the test was stopped and the results were recorded.

**EXAMPLE 1**

This is a comparative example that demonstrates the lost-circulation control performance of a composition that did not contain a fluid-loss additive. Composition 1 from Table 2 was subjected to the initial 0.35-MPa differential pressure, and the fluid passed through the 3-mm slot without demonstrating any plugging.

**EXAMPLE 2**

In this comparative example the concentration of MUDPUSH™ spacer mix was increased. Otherwise, Composition 2 from Table 2 is identical to Composition 1. Plugging of the slot was observed at the initial 0.35-MPa differential pressure; however, when the cell pressure was increased to 1.04 MPa (150 psi), the barrier gave way and the fluid passed through the slot.

**EXAMPLE 3**

In this example, fluid-loss additive UNIFLAC™ S was added to Composition 1 at a concentration of 0.7 g/L. Plugging of the slot was observed at the initial 0.35-MPa differential pressure, and plugging persisted until the differential pressure reached 3.5 MPa (500 psi). The plug failed when the pressure was increased beyond 3.5 MPa.

**EXAMPLE 4**

The UNIFLAC™ S concentration was further increased to 12.8 g/L. The resulting plug in the lost-circulation cell held pressure up to 6.9 MPa.

**EXAMPLE 5**

In this example, the UNIFLAC™ S concentration was the same as that in Example 4; however, the MUDPUSH™ spacer mix concentration was reduced and bentonite was eliminated from the formulation. These compositional changes lowered the fluid viscosity; however, the plugging performance did not change. The plug survived differential pressures as high as 6.9 MPa.

**Claims**

1. A composition, comprising a carrier fluid, stiff fibers, solid plugging particles and a fluid-loss control agent.

2. The composition of claim 1, wherein the stiff fibers have a Young's modulus between about 0.5 to 100 GPa.

3. The composition of claim 1, wherein the stiff fibers have a shortest cross-sectional distance between about 10 and about 100 microns.

4. The composition of claim 1, wherein the length of the stiff fibers is between about 5 and about 24 mm.

5. The composition of claim 1, wherein the stiff-fiber concentration is between about 2.85 kg/m$^3$ and about 42.8 kg/m$^3$.

6. The composition of claim 1, wherein the solid plugging particles are present as fine, medium and coarse particles, wherein the average particle size of the fine particles is smaller than 30 microns, the average particle size of the medium particles is between 30 microns and 180 microns and the average particle size of the coarse particles is between 180 microns and 1000 microns.

7. The composition of claim 1, wherein the solid volume fraction of the solid plugging particles is between 8 and 50 volume percent.

8. The composition of claim 1, wherein the fluid-loss control agent comprises diutan gum, guar gum, hydroxypropyl guar gum, carboxymethyl hydroxypropyl guar gum, xanthan gum, welan gum, hydroxyethylcellulose, hydroxypropylcellulose, carboxymethylcellulose, carboxymethylhydroxyethylcellulose, methylcellulose, 2-acrylamido-2-methyl propane sulfonic acid polymer (AMPS), polyacrylamide, copolymers of AMPS and acrylic acid, copolymers of AMPS and N,N-dimethylacrylamide, copolymers of acrylamide and 3-allyloxyhydroxypropane sulfonate, terpolymers of tannin, AMPS and acrylamide, terpolymers of AMPS, acrylamide and itaconic acid, terpolymers of AMPS, acrylic acid and N-methyl-N-vinyl acetamide, terpolymers of AMPS, vinyl sulfonate and N-methyl-N-vinyl acetamide, tetrapolymers of AMPS, N-vinyl-2-pyrrolidone, acrylamide and acrylic acid, sulfonated polystyrene, styrene sulfonate/ maleic anhydride copolymers, styrene sulfonate/maleic acid copolymers, sulfonated polyvinyltoluene polymer, polyvinyl alcohol, polyvinylpyrrolidone, maleic anhydride-N-vinylpyrrolidone polymer, styrene sulfonate/N-vinylpyrrolidone copolymer, polyethyleneimine, polyallylamine, alkyl ammonium chloride polymers, sulfonium chloride polymers, dimethyl-diallyl ammonium chloride polymers, methacrylamidopropyltrimethyl ammonium chloride polymers, polyvinylidene chloride latex or styrene-butadiene latex, and combinations thereof.

9. The composition of claim 1, wherein the fluid-loss agent concentration is between about 1.0 and 50.0 g/L.

10. The composition of claim 1, further comprising fibers that are selected from non-stiff fibers, differing stiff fibers or both; wherein the non-stiff fibers have a Young's modulus between about 0.5 to about 1.0 GPa.

11. A method for treating lost circulation in a well having a subterranean formation penetrated by a wellbore, having one or more pathways in the formation through which fluids escape the wellbore and enter the formation, comprising:

    (i) selecting a carrier fluid;
    (ii) selecting compositions, concentrations and dimensions of fibers and solid plugging particles;
    (iii) selecting a fluid-loss control agent;
    (iv) preparing a blocking fluid comprising the carrier fluid, fibers, solid plugging particles and the fluid-loss control agent; and
    (v) forcing the blocking fluid into the pathways until fluid flow into the formation is satisfactorily reduced.

12. The method of claim 11, wherein the stiff fibers have a Young's modulus between about 0.5 to 100 GPa.

13. The method of claim 11, wherein the solid plugging particles are present as fine, medium and coarse particles, wherein the average particle size of the fine particles is smaller than 30 microns, the average particle size of the medium particles is between 30 microns and 180 microns and the average particle size of the coarse particles is between 180 microns and 1000 microns; and wherein the solid volume fraction of the solid plugging particles is between 8 and 50 volume percent.

14. The method of claim 11, wherein the fluid-loss control agent comprises diutan gum, guar gum, hydroxypropyl guar gum, carboxymethyl hydroxypropyl guar gum, xanthan gum, welan gum, hydroxyethylcellulose, hydroxypropylcellulose, carboxymethylcellulose, carboxymethylhydroxyethylcellulose, methylcellulose, 2-acrylamido-2-methyl propane sulfonic acid polymer (AMPS), polyacrylamide, copolymers of AMPS and acrylic acid, copolymers of AMPS and N,N-dimethylacrylamide, copolymers of acrylamide and 3-allyloxyhydroxypropane sulfonate, terpolymers of tannin, AMPS and acrylamide, terpolymers of AMPS, acrylamide and itaconic acid, terpolymers of AMPS, acrylic acid and N-methyl-N-vinyl acetamide, terpolymers of AMPS, vinyl sulfonate and N-methyl-N-vinyl acetamide, tetrapolymers of AMPS, N-vinyl-2-pyrrolidone, acrylamide and acrylic acid, sulfonated polystyrene, styrene sulfonate/ maleic anhydride copolymers, styrene sulfonate/maleic acid copolymers, sulfonated polyvinyltoluene polymer, polyvinyl alcohol, polyvinylpyrrolidone, maleic anhydride-N-vinylpyrrolidone polymer, styrene sulfonate/N-vinylpyrrolidone copolymer, polyethyleneimine, polyallylamine, alkyl ammonium chloride polymers, sulfonium chloride polymers, dimethyl-diallyl ammonium chloride polymers, methacrylamidopropyltrimethyl ammonium chloride polymers, polyvinylidene chloride latex or styrene-butadiene latex, and combinations thereof.

15. The method of claim 11, further comprising fibers that are selected from non-stiff fibers, differing stiff fibers or both;

wherein the non-stiff fibers have a Young's modulus between about 0.5 to about 1.0 GPa.

**Figure 1**

**Figure 2**

**Figure 3**

Europäisches
Patentamt

European
Patent Office

Office européen
des brevets

## EUROPEAN SEARCH REPORT

Application Number

EP 12 30 5798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/064211 A1 (BUGRIN VLADIMIR SERGEEVICH [RU]; FU DIANKUI [RU]; SCHLUMBERGER CA LTD) 18 May 2012 (2012-05-18) * claims * | 1,3-5,8, 9,11,14 | INV. C09K8/03 C09K8/516 |
| X | EP 2 196 516 A1 (SCHLUMBERGER SERVICES PETROL [FR]; SCHLUMBERGER HOLDINGS [VG]; SCHLUMB) 16 June 2010 (2010-06-16) * examples 1-6 * * paragraph [0033] - paragraph [0044] * * paragraph [0048] * | 1-15 | |
| X | EP 2 261 458 A1 (SCHLUMBERGER SERVICES PETROL [FR]; SCHLUMBERGER TECHNOLOGY BV [NL]; SC) 15 December 2010 (2010-12-15) * claims * | 1-15 | |
| X | US 2010/307747 A1 (BRUNET-CAMBUS C; CAMBUS-BRUNET C; ERMEL M; KEFI S; LEE J; SHINDGIKAR N) 9 December 2010 (2010-12-09) * claims * | 1-15 | |
| A | WO 2011/076344 A1 (SCHLUMBERGER SERVICES PETROL [FR]; SCHLUMBERGER TECHNOLOGY BV [NL]; SC) 30 June 2011 (2011-06-30) * the whole document * | 1-15 | |

TECHNICAL FIELDS
SEARCHED (IPC)

C09K

The present search report has been drawn up for all claims

| Place of search | Date of completion of the search | Examiner |
|---|---|---|
| Munich | 8 November 2012 | Zimpfer, Emmanuel |

EPO FORM 1503 03.82 (P04C01)

**ANNEX TO THE EUROPEAN SEARCH REPORT
ON EUROPEAN PATENT APPLICATION NO.**                    EP 12 30 5798

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2012

| Patent document cited in search report | | Publication date | Patent family member(s) | | Publication date |
|---|---|---|---|---|---|
| WO 2012064211 | A1 | 18-05-2012 | NONE | | |
| EP 2196516 | A1 | 16-06-2010 | EP | 2196516 A1 | 16-06-2010 |
| | | | US | 2010152070 A1 | 17-06-2010 |
| EP 2261458 | A1 | 15-12-2010 | AU | 2010257824 A1 | 08-12-2011 |
| | | | CA | 2762922 A1 | 16-12-2010 |
| | | | EA | 201171343 A1 | 29-06-2012 |
| | | | EP | 2261458 A1 | 15-12-2010 |
| | | | WO | 2010142370 A1 | 16-12-2010 |
| US 2010307747 | A1 | 09-12-2010 | NONE | | |
| WO 2011076344 | A1 | 30-06-2011 | NONE | | |

EPO FORM P0459

For more details about this annex : see Official Journal of the European Patent Office, No. 12/82